# EUROPEAN PATENT APPLICATION

(11) **EP 4 804 582 A1**
(43) Date of publication of application: **09.09.2026**
(21) Application number: 26162642.8
(22) Date of filing: 05.03.2026
(51) Int. Cl.: H04W 12/02, H04W 36/00, H04L 9/40, H04W 12/55, H04W 84/12, H04W 12/06

(54) **ROAMING AND DISCOVERY OF CLIENT PRIVACY ENHANCED ACCESS POINT MULTI-LINK DEVICES**

(30) Priority: 06.03.2025 US 202563768113 P; 27.02.2026 US 202619553012
(71) Applicant: Apple Inc., Cupertino, CA 95014 (US)
(72) Inventor: HEDAYAT, Ahmad Reza, Cupertino, 95014 (US); KNECKT, Jarkko L., 00100 Helsinki (FI); LIU, Yong, Cupertino, 95014 (US); MONAJEMI, Pooya, Cupertino, 95014 (US)
(74) Representative: Zacco Denmark A/S

(57) **Abstract**

An electronic device is described. During operation, the electronic device can receive, associated with a second electronic device, a beacon or a probe response that indicates a presence of at least another electronic device with a basic service set (BSS) privacy enhancement (BPE) capability in a network. Then, the electronic device can associate and authenticate with the second electronic device, where, during or after the association or the authentication, the electronic device indicates a BPE capability of the electronic device. Next, the electronic device can receive, associated with the second electronic device, a unicast management frame recommending that the electronic device transition to a link associated with the other electronic device and having the BPE capability. Note that the second electronic device can include a BPE access point multi-link device (MLD).

## Description

### FIELD

The described embodiments relate, generally, to wireless communication among electronic devices, including roaming and discovery of client privacy enhanced access point multi-link devices (MLDs).

### BACKGROUND

Many electronic devices communicate with each other using wireless local area networks (WLANs), such as those based on a communication protocol that is compatible with an Institute of Electrical and Electronics Engineers (IEEE) 802.11 standard (which is sometimes referred to as 'Wi-Fi').

Network vendors often want to improve the privacy of IEEE 802.11-compatible communication for their customers. Privacy can be improved by operating client privacy enhanced (CPE) or basic service set (BSS) privacy enhanced (BPE) access point MLDs in the network. A non-access point MLD can obtain the best privacy by operating as a BPE access point MLD. Note that CPE provides privacy enhancement to a client or a station, and BPE provides privacy enhancement to an access point and a client or a station (e.g., by encrypting beacons and data, and hashing a MAC address).

However, currently discovery signaling is not defined for the CPE and BPE access point MLDs. Notably, CPE and BPE access point MLDs cannot be advertised in the mainstream out-of-band discovery mechanisms (such as in a reduced neighbor report or RNR). Instead, only a robust security network extension element (RSNXE) can define CPE access point capability. Moreover, BPE access point MLDs cannot be part of the large networks, because discovery and roaming signaling are not defined for the BPE access point MLDs. Indeed, currently discovery and seamless roaming (SR) of BPE access points is not possible unless one or more BPE access point parameters (such as a key) are pre-shared with a client or station.

### SUMMARY

An electronic device is described. This electronic device includes: an antenna node communicatively coupled to an antenna; and one or more interface circuits, communicatively coupled to the antenna node. During operation, the one or more interface circuits receive, associated with a second electronic device, a beacon or a probe response that indicates a presence of at least another electronic device with a BPE capability in a network. Then, the one or more interface circuits associate and authenticate with the second electronic device, where, during or after the association or the authentication, the electronic device indicates a BPE capability of the electronic device. Next, the one or more interface circuits receive, associated with the second electronic device, a unicast management frame recommending that the electronic device transition to a link associated with the other electronic device and having the BPE capability.

Note that the second electronic device can include a BPE access point MLD. Moreover, after the association and the authentication, the one or more interface circuits can provide, addressed to the second electronic device, a BSS transition management (BTM) query. The BTM query can request information specifying the BPE capability of the other electronic device.

Furthermore, the unicast management frame can include a BTM request.

Additionally, the second electronic device can include a BPE access point multi-link device (MLD), and the link can be provided by the second electronic device.

In some embodiments, the link can be provided by a third electronic device that is different from the second electronic device. For example, the second electronic device can be a BPE access point MLD and the third electronic device can be a different physical access point from the second electronic device.

Note that the BPE capability of the electronic device can be provided in an association request, a re-association request and/or an RSNXE. For example, the BPE capability of the electronic device can include BPE parameters of the electronic device.

Moreover, after the association and/or the authentication, the one or more interface circuits can receive, associated with the second electronic device, BPE parameters of the other electronic device. For example, the BPE parameters of the other electronic device can be received in an RNR.

Furthermore, the other electronic device can include the second electronic device.

Additionally, the electronic device can be preconfigured with BPE parameters of the other electronic device.

In some embodiments, the transition can include a fast transition or seamless roaming.

Note that, after the association and/or the authentication, the one or more interface circuits can: provide, addressed to the second electronic device, an add link request that includes BPE non-access point MLD parameters; and receive, associated with the second electronic device, an add link response that includes BPE access point MLD parameters. Moreover, after the add link response is received, the other electronic device can use a different epoch start time and/or different epoch numbers than the electronic device.

Furthermore, the electronic device can be compatible with an IEEE 802.11bi standard.

Other embodiment provides the second electronic device or the other electronic device, which can perform counterpart operations to at least some of the aforementioned operations of the electronic device.

Other embodiments provide one or more integrated circuits (such as the one or more interface circuits) for use with the electronic device, the second electronic device or the other electronic device. The one or more integrated circuits can perform at least some of the aforementioned operations of the electronic device, or counterpart operations of the second electronic device or the other electronic device.

Other embodiments provide a computer-readable storage medium for use with the electronic device, the second electronic device or the other electronic device. When program instructions stored in the computer-readable storage medium are executed by the electronic device, the second electronic device or the other electronic device, the program instructions can cause the electronic device, the second electronic device or the other electronic device to perform at least some of the aforementioned operations of the electronic device, the second electronic device or the other electronic device.

Other embodiments provide a method. The method includes at least some of the aforementioned operations performed by the electronic device or the second electronic device.

This Summary is provided for purposes of illustrating some exemplary embodiments, so as to provide a basic understanding of some aspects of the subject matter described herein. Accordingly, it will be appreciated that the above-described features are only examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

The included drawings are for illustrative purposes and serve only to provide examples of possible structures and arrangements for the disclosed systems and techniques for intelligently and efficiently managing communication between multiple associated user devices. These drawings in no way limit any changes in form and detail that can be made to the embodiments by one skilled in the art without departing from the spirit and scope of the embodiments. The embodiments will be readily understood by the following detailed description in conjunction with the accompanying drawings, where like reference numerals designate like structural elements.
FIG. 1 is a block diagram illustrating an example of communication between electronic devices.
FIG. 2 is a block diagram illustrating an example of communication between electronic devices.
FIG. 3 is a flow diagram illustrating an example method for providing a recommendation using an electronic device of FIG. 1 or 2.
FIG. 4 is a flow diagram illustrating an example method for receiving a recommendation using an electronic device of FIG. 1 or 2.
FIGs. 5-7 are drawings illustrating examples of communication between the electronic devices of FIG. 1 or 2.
FIG. 8 is a drawing illustrating an example of a client privacy enhanced (CPE) and basic service set (BSS) privacy enhanced (BPE) access point information field for a reduced neighbor report (RNR).
FIG. 9 is a drawing illustrating an example of BPE access point information field for an RNR.
FIG. 10 is a drawing illustrating an example of communication between the electronic devices of FIG. 1 or 2.
FIG. 11 is a drawing illustrating an example of BPE access point information field for an RNR.
FIG. 12 is a drawing illustrating an example of communication between the electronic devices of FIG. 1 or 2.
FIG. 13 is a drawing illustrating an example of a network architecture.
FIG. 14 is a drawing illustrating an example of communication between the electronic devices of FIG. 1 or 2.
FIG. 15 is a drawing illustrating an example of epochs associated with a client privacy enhanced (CPE) calculation.
FIGs. 16-20 are drawings illustrating examples of communication between the electronic devices of FIG. 1 or 2.
FIG. 21 is a drawing illustrating an example of a privacy beacon frame format.
FIG. 22 illustrates an example of an electronic device of FIG. 1 according to some embodiments of the disclosure.

Note that like reference numerals refer to corresponding parts throughout the drawings. Moreover, multiple instances of the same part are designated by a common prefix separated from an instance number by a dash.

### DETAILED DESCRIPTION

An electronic device is described. During operation, the electronic device can receive, associated with a second electronic device, a beacon or a probe response that indicates a presence of at least another electronic device with a BPE capability in a network. Then, the electronic device can associate and authenticate with the second electronic device, where, during or after the association or the authentication, the electronic device indicates a BPE capability of the electronic device. Next, the electronic device can receive, associated with the second electronic device, a unicast management frame recommending that the electronic device transition to a link associated with the other electronic device and having the BPE capability. Note that the second electronic device can include a BPE access point MLD.

By communicating the BPE capability, these communication techniques can facilitate network-assisted discovery and roaming. Notably, the communication techniques can enable: one or more BPE access points as part of the network: BPE access point discovery through one or more associated access points; and/or activating one or more BPE links in an access point MLD or seamless roaming to a BPE access point. Moreover, the communication techniques can provide enhanced privacy for a variety of network types. Consequently, the communication techniques can improve the user experience when using the electronic device or the second electronic device.

In the discussion that follows, a user can include: an individual, an organization, a company, a governmental agency, a for-profit business entity, a not-for-profit entity, or a group of one or more individuals.

Note that the communication techniques can be used during or with wired or wireless communication between electronic devices in accordance with a communication protocol, such as a communication protocol that is compatible with an IEEE 802.11 standard (which is sometimes referred to as Wi-Fi). However, the communication techniques can also be used with a wide variety of other communication protocols, and in electronic devices (such as portable electronic devices or mobile devices) that can incorporate multiple different radio access technologies (RATs) to provide connections through different wireless networks that offer different services and/or capabilities.

The electronic device and/or the second electronic device can include hardware and software to support a wireless personal area network (WPAN) according to a WPAN communication protocol, such as those standardized by the Bluetooth Special Interest Group and/or those developed by Apple (in Cupertino, California) that are referred to as an Apple Wireless Direct Link (AWDL). Moreover, the electronic device and/or the second electronic device can communicate via: a wireless wide area network (WWAN), a wireless metro area network (WMAN), a WLAN, near-field communication (NFC), a cellular-telephone or data network (such as using a third generation (3G) communication protocol, a fourth generation (4G) communication protocol, e.g., Long Term Evolution or LTE, LTE Advanced (LTE-A), a fifth generation (5G) communication protocol, or other present or future developed advanced cellular communication protocol) and/or another communication protocol. In some embodiments, the communication protocol includes a peer-to-peer communication technique.

The electronic device and/or the second electronic device, in some embodiments, can also operate as part of a wireless communication system, which can include a set of client devices, which can also be referred to as stations or client electronic devices, interconnected to an access point, e.g., as part of a WLAN, and/or to each other, e.g., as part of a WPAN and/or an 'ad hoc' wireless network, such as a Wi-Fi direct connection. In some embodiments, the client device can be any electronic device that is capable of communicating via a WLAN technology, e.g., in accordance with a WLAN communication protocol. Furthermore, in some embodiments, the WLAN technology can include a Wi-Fi (or more generically a WLAN) wireless communication subsystem or radio, and the Wi-Fi radio can implement an IEEE 802.11 technology, such as one or more of: IEEE 802.11a; IEEE 802.11b; IEEE 802.11g; IEEE 802.11-2007; IEEE 802.11n; IEEE 802.11-2012; IEEE 802.11-2016; IEEE 802.11ac; IEEE 802.11ax, IEEE 802.11ba, IEEE 802.11be, IEEE 802.11bi, IEEE 802.11me, IEEE 802.11bn, IEEE 802.11bx, IEEE 802.11mf, IEEE 802.11 i3, or other present or future developed IEEE 802.11 technologies.

Note that the electronic device and/or the second electronic device can use multi-user transmission (such as OFDMA) and/or multiple-input multiple-output (MIMO).

In some embodiments, the electronic device and/or the second electronic device can act as a communications hub that provides access to a WLAN and/or to a WWAN and, thus, to a wide variety of services that can be supported by various applications executing on the electronic device and/or the second electronic device. Thus, the electronic device and/or the second electronic device can include an 'access point' that communicates wirelessly with other electronic devices (such as using Wi-Fi), and that provides access to another network (such as the Internet) via IEEE 802.3 (which is sometimes referred to as 'Ethernet'). Note that the access point can be a physical access point or a virtual or 'software' access point that is implemented on a computer or an electronic device. However, in other embodiments the electronic device and/or the second electronic device may not be an access point.

Additionally, it should be understood that the electronic devices described herein can be configured as multi-mode wireless communication devices that are also capable of communicating via different 3G and/or second generation (2G) RATs. In these scenarios, a multi-mode electronic device or UE can be configured to prefer attachment to LTE networks offering faster data rate throughput, as compared to other 3G legacy networks offering lower data rate throughputs. For example, in some implementations, a multi-mode electronic device is configured to fall back to a 3G legacy network, e.g., an Evolved High Speed Packet Access (HSPA+) network or a Code Division Multiple Access (CDMA) 2000 Evolution-Data Only (EV-DO) network, when LTE and LTE-A networks are otherwise unavailable. More generally, the electronic devices described herein can be capable of communicating with other present or future developed cellular-telephone technologies.

In accordance with various embodiments described herein, the terms 'wireless communication device,' 'electronic device," 'mobile device," 'mobile station,' 'wireless station,' 'wireless access point,' 'station,' access point' and 'user equipment' (UE) can be used herein to describe one or more consumer electronic devices that can be capable of performing procedures associated with various embodiments of the disclosure.

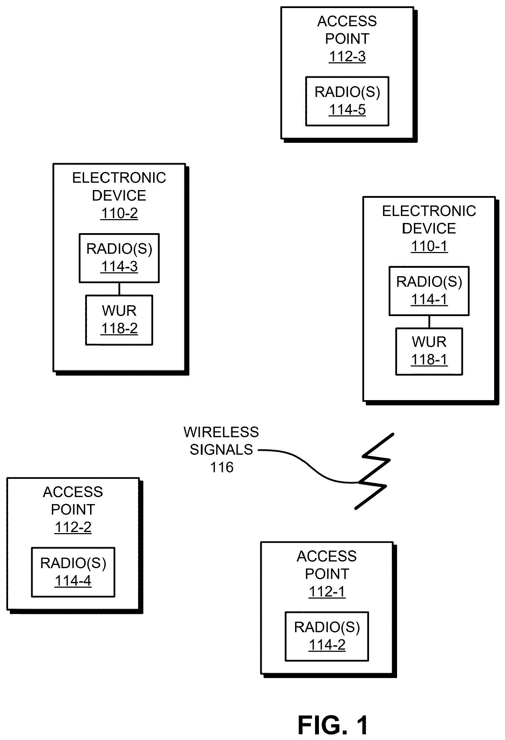

FIG. 1 presents a block diagram illustrating an example of electronic devices communicating wirelessly. Notably, one or more electronic devices 110 (such as a smartphone, a laptop computer, a notebook computer, a tablet, or another such electronic device) and access point 112-1 can communicate wirelessly in a WLAN using an IEEE 802.11 communication protocol. Thus, electronic devices 110 can be associated with or can have one or more connections with access point 112-1. For example, electronic devices 110 and access point 112-1 can wirelessly communicate while: detecting one another by scanning wireless channels, transmitting and receiving beacons or (equivalently) beacon frames on wireless channels, establishing connections (for example, by transmitting connect requests), and/or transmitting and receiving packets or frames (which can include the request and/or additional information, such as data, as payloads). Note that access point 112-1 can provide access to a network, such as the Internet, via an Ethernet protocol, and can be a physical access point or a virtual or 'software' access point that is implemented on a computer or an electronic device. In the discussion that follows, electronic devices 110 are sometimes referred to as 'clients,' 'stations,' or 'recipient electronic devices.'

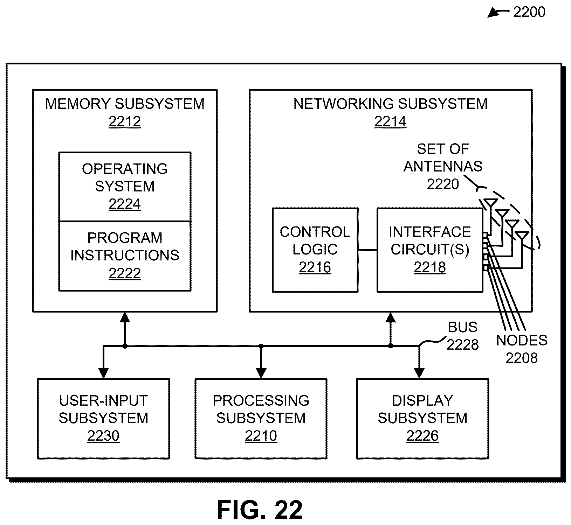

As described further below with reference to FIG. 22, electronic devices 110 and access point 112-1 can include subsystems, such as a networking subsystem, a memory subsystem, and a processor subsystem. In addition, electronic devices 110 and access point 112-1 can include radios 114 in the networking subsystems. More generally, electronic devices 110 and access point 112-1 can include (or can be included within) any electronic devices with networking subsystems that enable electronic devices 110 and access point 112-1, respectively, to wirelessly communicate with another electronic device. This can include transmitting beacon frames on wireless channels to enable the electronic devices to make initial contact with or to detect each other, followed by exchanging subsequent data/management frames (such as connect requests) to establish a connection, configure security options (e.g., IPSec), transmit and receive packets or frames via the connection, etc.

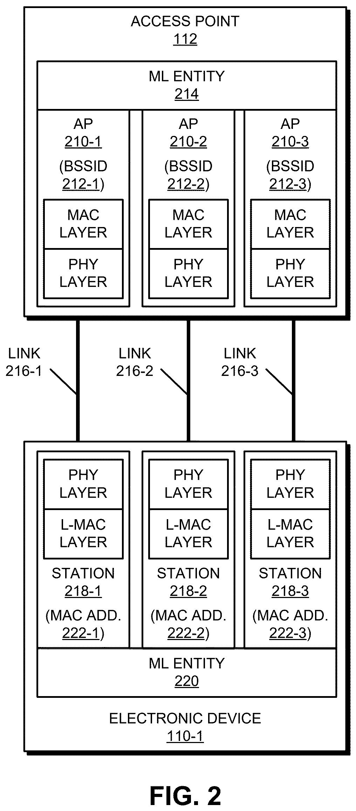

As can be seen in FIG. 1, wireless signals 116 (represented by a jagged line) are communicated by one or more radios 114-1 and 114-2 in electronic device 110-1 and access point 112-1, respectively. For example, as noted previously, electronic device 110-1 and access point 112-1 can exchange packets or frames using a Wi-Fi communication protocol in a WLAN. As illustrated further below with reference to FIGs. 2-22, one or more radios 114-1 can receive wireless signals 116 that are transmitted by one or more radios 114-2 via one or more links between electronic device 110-1 and access point 112-1. Alternatively, the one or more radios 114-1 can transmit wireless signals 116 that are received by the one or more radios 114-2.

In some embodiments, wireless signals 116 are communicated by one or more radios 114 in electronic devices 110 and access point 112-1, respectively. For example, one or more radios 114-1 and 114-3 can receive wireless signals 116 that are transmitted by one or more radios 114-2 via one or more links between electronic devices 110-1 and 110-2, and access point 112-1.

Note that the one or more radios 114-1 can consume additional power in a higher-power mode. If the one or more radios 114-1 remain in the higher-power mode even when they are not transmitting or receiving packets or frames, the power consumption of electronic device 110-1 can be needlessly increased. Consequently, electronic devices 110 can include wake-up radios (WURs) 118 that listen for and/or receive wake-up frames (and/or other wake-up communications), e.g., from access point 112-1. When a particular electronic device (such as electronic device 110-1) receives a wake-up frame, WUR 118-1 can selectively wake-up radio 114-1, e.g., by providing a wake-up signal that selectively transitions at least one of the one or more radios 114-1 from a lower-power mode to the higher-power mode.

IEEE 802.11be has proposed the use of multiple concurrent links between electronic devices, such as access point 112-1 and one or more of electronic device 110. For example, as shown in FIG. 2, which presents a block diagram illustrating an example of electronic devices communicating wirelessly, access point 112-1 can be an access point multi-link device (MLD) that includes multiple access points 210, which are cohosted or collocated in access point 112-1. In the present discussion, 'cohosted' or 'collocated' means that access points 210 are physically or virtually implemented in the same access point MLD, or are affiliated with the same access point MLD. Note that this meaning of 'cohosted' does not indicate that access points 210 have the same primary 20 MHz channel. Access points 210 can have associated BSSIDs 212, and media access control (MAC) and physical (PHY) layers (including separate radios, which can be included in the same or different integrated circuits). Note that access point 112-1 can have an ML entity 214 having an MLD MAC address, an ML identifier, a service set identifier (SSID), and that can provide security for access points 210.

Moreover, access points 210 can have different concurrent links 216 in different bands of frequencies (such as a link 216-1 with a link identifier 1 in a 2.4 GHz band of frequencies, a link 216-2 with a link identifier 2 in a 5 GHz band of frequencies and a link 216-3 with a link identifier 3 in a 6 GHz bands of frequencies) with stations 218 in at least electronic device 110-1, which is a non-access point MLD. These stations can have associated lower MAC and PHY layers (including separate radios, which can be included in the same or different integrated circuits). In addition, electronic device 110-1 can have an ML entity 220 having an MLD MAC address.

For example, the access point MLD can have three radios. One radio can operate on a 2.4 GHz band of frequencies, and the other radios can operate on the 5/6 GHz bands of frequencies. The access point MLD can create three access points 210, operating on a 2.4 GHz channel, a 5 GHz channel, and a 6 GHz channel respectively. The three access points 210 can operate independently, each of which has at least one BSS with different BSSIDs 212. (While FIG. 2 illustrates the access point MLD with three access points 210, more generally the access point MLD can include up to 15 access points with one or more access points in a given band of frequencies.) Moreover, each of the access points 210 can accommodate both legacy non-access point stations as well as non-access point MLD stations 218. Furthermore, each of access points 210 can transmit its own beacon frames using its own BSSID. Additionally, the access point MLD can have ML entity 214, identified by an MLD address (such as an MLD MAC address). This MAC address can be used to pair with ML entity 220 of the associated non-access point MLD stations 218.

Moreover, the non-access point MLD station (e.g., electronic device 110-1) can have two or three radios. One radio can operate on a 2.4 GHz band of frequencies, and the other radios can operate on the 5/6 GHz bands of frequencies. When the non-access point MLD establishes an ML association with the access point MLD, it can create up to three stations 218, each of which associates to one of access points 210 within the access point MLD. Each of stations 218 can have a different OTA MAC address 222. The non-access point MLD can also have ML entity 220, identified by another MLD address (such as another MLD MAC address). This MLD MAC address can be used to pair with ML entity 214 of the associated access point MLD.

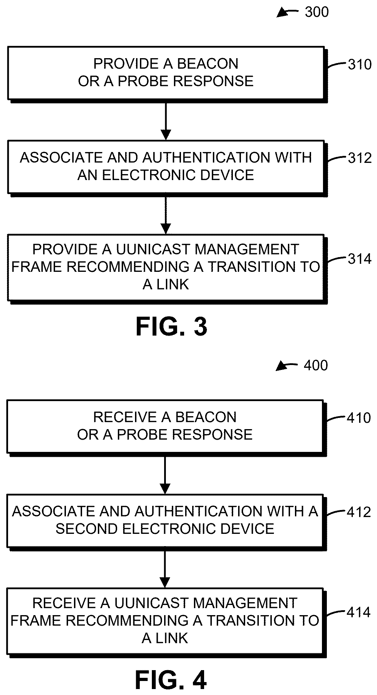

Referring back to FIG. 1, as noted previously, without BPE capability information, it can be difficult to perform network-assisted discovery and roaming. In order to address these problems, as described further below with reference to FIGs. 3-21, in the communication techniques a station (such as electronic device 110-1) and an access point (such as access point 112-1, such as a BPE access point MLD) can perform the communication techniques.

Notably, access point 112-1 can provide, a beacon or a probe response that indicates a presence of at least another electronic device with a BPE capability in a network. In some embodiments, the probe response can be provided in response to a probe request received from electronic device 110-1.

Then, access point 112-1 can associate and authenticate with electronic device 110-1, where, during or after the association or the authentication, electronic device 110-1 can provide (and access point 112-1 can subsequently receive) a BPE capability of electronic device 110-1. For example, the BPE capability of electronic device 110-1 can be provided in an association request, a re-association request and/or an RSNXE. Note that the BPE capability of electronic device 110-1 can include BPE parameters of electronic device 110-1.

Moreover, after the association and the authentication, electronic device 110-1 can provide, addressed to access point 112-1, a BTM query. The BTM query can request information specifying the BPE capability of the other electronic device. Alternatively or additionally, after the association and/or the authentication, electronic device 110-1 can receive, associated with access point 112-1, BPE parameters of the other electronic device. For example, the BPE parameters of the other electronic device can be received in an RNR. However, in some embodiments, electronic device 110-1 can be preconfigured with BPE parameters of the other electronic device.

Next, access point 112-1 can provide, addressed to electronic device 110-1, a unicast management frame (such as a BTM request) recommending that electronic device 110-1 transition (such as a fast transition or seamless roaming) to a link associated with the other electronic device and having the BPE capability. This unicast management frame can be received by electronic device 110-1. Note that, in some embodiments, the link is provided by access point 112-1. Alternatively, the other electronic device can be different from access point 112-1, such as a different physical access point from access point 112-1.

In some embodiments, after the association and/or the authentication, electronic device 110-1 can: provide, addressed to access point 112-1, an add link request that includes BPE non-access point MLD parameters; and receive, associated with access point 112-1, an add link response that includes BPE access point MLD parameters. Moreover, after the add link response is received, the other electronic device can use a different epoch start time and/or different epoch numbers than electronic device 110-1.

In summary, the disclosed communication techniques can facilitate network-assisted discovery and roaming. Notably, the communication techniques can enable: one or more BPE access points as part of the network: BPE access point discovery through one or more associated access points; and/or activating one or more BPE links in an access point MLD or seamless roaming to a BPE access point. These capabilities can provide enhanced privacy for a variety of network types. In these ways, the communication techniques can improve the user experience when using electronic device 110-1 or access point 112-1.

While the preceding discussion illustrated communication by electronic device 110-1 and access point 112-1, in other embodiments the roles of electronic device 110-1 and access point 112-1 can be reversed in the communication techniques. Alternatively, in some embodiments, the communication techniques are performed between access point 112-1 and access point 112-2. Thus, the communication techniques can be performed between: at least a pair of access points; at least a pair of stations; or an access point and at least a station.

Note that access point 112-1 and one or more electronic devices (such as electronic devices 110-1 and/or 110-2) can be compatible with an IEEE 802.11 standard that includes trigger-based channel access (such as IEEE 802.11ax). However, access point 112-1 and the one or more electronic devices can also communicate with one or more legacy electronic devices that are not compatible with the IEEE 802.11 standard (i.e., that do not use multi-user trigger-based channel access). In some embodiments, access point 112-1 and the one or more electronic devices use multi-user transmission (such as OFDMA). For example, the one or more radios 114-2 can provide one or more trigger frames for the one or more electronic devices. Moreover, in response to receiving the one or more trigger frames, the one or more radios 114-1 can provide one or more group or block acknowledgments to the one or more radios 114-2. For example, the one or more radios 114-1 can provide the one or more group acknowledgments during associated assigned time slot(s) and/or in an assigned channel(s) in the one or more group acknowledgments. However, in some embodiments one or more of electronic devices 110 can individually provide acknowledgments to the one or more radios 114-2. Thus, the one or more radios 114-1 (and, more generally, radios 114 in the electronic devices 110-1 and/or 110-2) can provide one or more acknowledgments to the one or more radios 114-2.

In the described embodiments, processing a packet or frame in one of electronic devices 110 and access point 112-1 includes: receiving wireless signals 116 encoding a packet or a frame; decoding/extracting the packet or frame from received wireless signals 116 to acquire the packet or frame; and processing the packet or frame to determine information contained in the packet or frame (such as data in the payload).

In general, the communication via the WLAN in the communication techniques can be characterized by a variety of communication-performance metrics. For example, the communication-performance metric can include one or more of: an RSSI, a data rate, a data rate for successful communication (which is sometimes referred to as a 'throughput'), a latency, an error rate (such as a retry or resend rate), a mean-square error of equalized signals relative to an equalization target, inter-symbol interference, multipath interference, a signal-to-noise ratio (SNR), a width of an eye pattern, a ratio of a number of bytes successfully communicated during a predetermined or predefined time interval (such as a time interval between, e.g., 1 and 10 s) to an estimated maximum number of bytes that can be communicated in the predetermined or predefined time interval (the latter of which is sometimes referred to as the 'capacity' of a communication channel or link), and/or a ratio of an actual data rate to an estimated data rate (which is sometimes referred to as 'utilization').

Although we describe the network environment shown in FIG. 1 as an example, in alternative embodiments, different numbers and/or types of electronic devices can be present. For example, some embodiments can include more or fewer electronic devices. As another example, in other embodiments, different electronic devices can be transmitting and/or receiving packets or frames. In some embodiments, multiple links can be used during communication between electronic devices 110. Consequently, one of electronic devices 110 can perform operations in the communication techniques.

FIG. 3 presents a flow diagram illustrating an example method 300 for providing a recommendation. This method can be performed by a second electronic device, such as access point 112-1 in FIG. 1. For example, method 300 can be implemented by one or more interface circuits in access point 112-1 in FIG. 1. Note that the communication between the second electronic device and an electronic device (such as electronic device 110-1 in FIG. 1) can be compatible with an IEEE 802.11 communication protocol.

During operation, the second electronic device can provide, a beacon or a probe response (operation 310) that indicates a presence of at least another electronic device with a BPE capability in a network. Then, the second electronic device can associate and authenticate with an electronic device (operation 312), where, during or after the association or the authentication (operation 312), the second electronic device receives, associated with the electronic device, a BPE capability of the electronic device. Next, the second electronic device can provide, addressed to the electronic device, a unicast management frame recommending that the electronic device transition to a link (operation 314) associated with the other electronic device and having the BPE capability.

Note that the second electronic device can include a BPE access point MLD. Moreover, after the association and/or the authentication (operation 312), the second electronic device can provide, addressed to the electronic device, a BTM query. The BTM query can request information specifying the BPE capability of the other electronic device.

Furthermore, the unicast management frame can include a BTM request.

Additionally, the second electronic device can include a BPE access point MLD, and the link can be provided by the second electronic device.

In some embodiments, the link can be provided by a third electronic device that is different from the second electronic device. For example, the second electronic device can be a BPE access point MLD and the third electronic device can be a different physical access point from the second electronic device.

Note that the BPE capability of the electronic device can be provided in an association request, a re-association request and/or an RSNXE. For example, the BPE capability of the electronic device can include BPE parameters of the electronic device.

Moreover, after the association and/or the authentication (operation 312), the second electronic device can provide, addressed to the electronic device, BPE parameters of the other electronic device. For example, the BPE parameters of the other electronic device can be provided in an RNR.

Furthermore, the other electronic device can include the second electronic device.

Additionally, the electronic device can be preconfigured with BPE parameters of the other electronic device.

In some embodiments, the transition can include a fast transition or seamless roaming.

Note that, after the association and/or the authentication (operation 312), the second electronic device can: receive, associated with the electronic device, an add link request that includes BPE non-access point MLD parameters; and provide, addressed to the electronic device, an add link response that includes BPE access point MLD parameters. Moreover, after the add link response is received, the other electronic device can use a different epoch start time and/or different epoch numbers than the electronic device.

Furthermore, the electronic device can be compatible with an IEEE 802.11bi standard.

FIG. 4 presents a flow diagram illustrating an example method 400 for receiving a recommendation. This method can be performed by an electronic device, such as electronic device 110-1 in FIG. 1. For example, method 300 can be implemented by one or more interface circuits in electronic device 110-1 in FIG. 1. Note that the communication between the electronic device and a second electronic device (such as access point 112-1 in FIG. 1) can be compatible with an IEEE 802.11 communication protocol.

During operation, the electronic device can receive, associated with a second electronic device, a beacon or a probe response (operation 410) that indicates a presence of at least another electronic device with a BPE capability in a network. Then, the electronic device can associate and authenticate with the second electronic device (operation 412), where, during or after the association or the authentication (operation 412), the electronic device indicates a BPE capability of the electronic device. Next, the electronic device can receive, associated with the second electronic device, a unicast management frame recommending that the electronic device transition to a link (operation 414) associated with the other electronic device and having the BPE capability.

Note that the second electronic device can include a BPE access point MLD. Moreover, after the association and the authentication (operation 412), the electronic device can receive, associated with the second electronic device, a BTM query. The BTM query can request information specifying the BPE capability of the other electronic device.

Furthermore, the unicast management frame can include a BTM request.

Additionally, the second electronic device can include a BPE access point MLD, and the link can be provided by the second electronic device.

In some embodiments, the link can be provided by a third electronic device that is different from the second electronic device. For example, the second electronic device can be a BPE access point MLD and the third electronic device can be a different physical access point from the second electronic device.

Note that the BPE capability of the electronic device can be provided in an association request, a re-association request and/or an RSNXE. For example, the BPE capability of the electronic device can include BPE parameters of the electronic device.

Moreover, after the association and/or the authentication (operation 412), the electronic device can receive, associated with the second electronic device, BPE parameters of the other electronic device. For example, the BPE parameters of the other electronic device can be received in an RNR.

Furthermore, the other electronic device can include the second electronic device.

Additionally, the electronic device can be preconfigured with BPE parameters of the other electronic device.

In some embodiments, the transition can include a fast transition or seamless roaming.

Note that, after the association and/or the authentication (operation 412), the electronic device can: provide, addressed to the second electronic device, an add link request that includes BPE non-access point MLD parameters; and receive, associated with the second electronic device, an add link response that includes BPE access point MLD parameters. Moreover, after the add link response is received, the other electronic device can use a different epoch start time and/or different epoch numbers than the electronic device.

Furthermore, the electronic device can be compatible with an IEEE 802.11bi standard.

In some embodiments of methods 300 (FIG. 3) and/or 400, there can be additional or fewer operations. Further, one or more different operations can be included. Moreover, the order of the operations can be changed, and/or two or more operations can be combined into a single operation or performed at least partially in parallel.

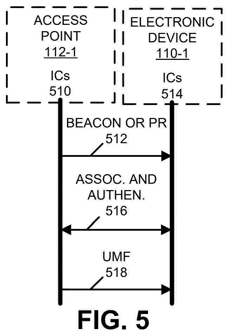

The communication techniques are further illustrated in FIG. 5, which presents a flow diagram illustrating an example of communication between electronic devices 110-1 and access point 112-1. During operation, one or more interface circuits or ICs (or interface circuitry) 510 in access point 112-1 can provide or generate a beacon or a probe response (PR) 512 that indicates a presence of at least another electronic device with a BPE capability in a network.

After receiving the beacon or the probe response 512, one or more interface circuits (or interface circuitry) 514 in electronic device 110-1 can associate and authenticate 516 with access point 112-1, where, during or after the association or the authentication 516, the one or more interface circuits 514 indicate a BPE capability of electronic device 110-1.

Next, the one or more interface circuits 510 can provide, addressed to electronic device 110-1, a unicast management frame (UMF) 518 recommending that electronic device 110-1 transition to a link associated with the other electronic device and having the BPE capability. This unicast management frame can be received by the one or more interface circuits 514.

While communication between the components in FIG. 5 is illustrated with unilateral or bilateral communication (e.g., lines having a single arrow or dual arrows), in general a given communication operation can be unilateral or bilateral. Moreover, while operations in FIG. 5 are illustrated as being sequential, in some embodiments at least some of the operations can be performed in parallel.

We now further describe embodiments of the disclosed communication techniques. As discussed previously, it can be difficult to perform network-assisted discovery and roaming without BPE capability information. These problems can be addressed using the disclosed network-assisted discovery and roaming. Notably, a Seamless Mobility Domain (SMD) and a Mobility Domain (MD) can be modified to contain BPE access points, CPE access points and/or legacy access points. Without this support, the use of BPE access point MLDs can be limited to only few network types. For example, the following features can be added to enable the BPE access points as part of a network: BPE access point discovery through associated access points; and/or activating BPE links in an access point MLD or SR to a BPE access point.

The disclosed communication techniques can provide enhanced privacy for a variety of network types. For a mobile access point or one or more access points in a vehicle: the network may only include BPE access points; BPE access point initial discovery can occur via out-of-band BPE access point MLD parameter pre-sharing; and roaming to BPE access points is not supported. For a closed network in a public space: the network may only include BPE access points; BPE access point initial discovery can occur via out-of-band BPE access point MLD parameter pre-sharing; and roaming to BPE access points is supported. For a residential network not for public use or a corporate network: the network may have only BPE access points or access points with any privacy support; BPE access point initial discovery can occur via out-of-band BPE access point MLD parameter pre-sharing or assisted BPE access point discovery through an associated access point; and roaming to BPE access points is supported. For a hotspot access point (e.g., a shopping mall or a restaurant network), a visitor network or a PassPoint network: access points with any privacy can be supported (BPE can be supported for the best privacy); BPE access point initial discovery can occur via out-of-band BPE access point MLD parameter pre-sharing or assisted BPE access point discovery through an associated access point; and roaming to BPE access points is supported. Note that the discovery and roaming support for BPE access point MLDs in SMD and MD can be used to enable features (such as BPE access point initial discovery using assisted BPE access point discovery through an associated access point, and roaming to BPE access points) in a residential network not for public use, a corporate network, a hotspot access point, a visitor network or a PassPoint network.

Moreover, a station may only discover legacy networks, when it is not provisioned with BPE access point MLD identification information. A station can discover suitable legacy access point MLD, e.g., during association, the station can signal its BPE capability in an RSNXE or in a (re)association request. After the station is associated: the station can request a BPE access point MLDs information; and/or the access point can provide solicited or unsolicited BPE access point MLD information (BPE access points can be part of the same network or extended service set or ESS). Furthermore, the station can roam, fast transition (FT) or associate with a BPE access point MLD: when the BPE access point MLD is part of the same network and uses the same authentication technique; and/or SR support is available. Note that, in some embodiments during SR, the station can have links ongoing in the two access points at the same time.

For example, during network discovery, beacons and probe responses can signal one or more available BPE access points in the ESS. Moreover, during authentication and association with a legacy access point, a protected association or re-association request can signal that a station is BPE capable. Furthermore, solicited or unsolicited information about one or more BPE access point MLDs can be included in a protected BTM request frame. Additionally, an FT to a BPE access point MLD can occur, e.g., a station can associate with a BPE access point MLD.

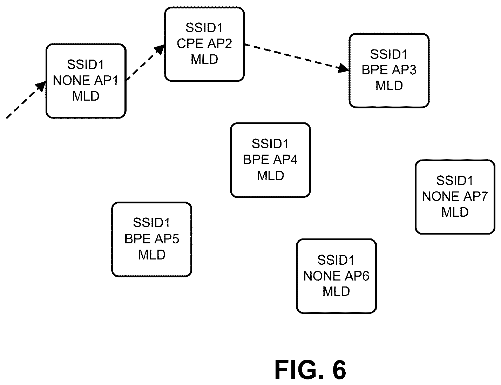

As shown in FIG. 6, which presents a drawing illustrating an example of communication between the electronic devices of FIG. 1 or 2, there can be several embodiments of network-assisted discovery and roaming. Notably, a scanning station can get general information whether a network includes at least one access point with CPE or BPE capability. For example, an MLD access point without WLAN privacy support can signal or provide information about BLE access points in a network during initial association. The BPE access point MLDs information may not be provided in more detail for non-associated stations. Moreover, for initial discovery: one bit field can set, e.g., to '1', when the network has at least one CPE access point MLD; and/or one bit field set, e.g., to '1', when the network has at least one BPE access point. MLD. This information can be part of a beacon and/or probe response body. The fields can be in an RSNXE and/or in an extended capability element. Each CPE access point MLD can have the following capability signaling: a capability bit in an RNR that signals that the reported access point is a CPE access point; and/or a bit in the RSNXE that signals that the access point has CPE support. Note that these fields can be transmitted clear over the air. Moreover, note that these fields can be present in RNR, beacon and/or probe responses. For example, a CPE access point can assist a BPE access point with discovery and transition. In authentication and association: capabilities of a station can be added to an association request or to a 4-way handshake (note that IEEE 802.11bi can define protected association that is good for the station capabilities signaling); and/or, after a station has signaled BPE capability, the network can provide discovery information of the BPE access point MLDs in the ESS to the station.

In FIG. 6, note that BPE access points 3-5 may only be discoverable to stations that have been preconfigured with BPE access point information, while the remaining access points may be discoverable by all stations. During initial association, access points can signal CPE access points that are available in a network. Alternatively or additionally, CPE access point 2 can assist in BPE access point 3 discovery and transition.

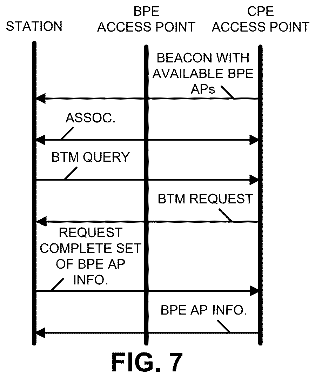

FIG. 7, which presents a drawing illustrating an example of communication between the electronic devices of FIG. 1 or 2, illustrates assisted BPE access point discovery. Notably, a CPE access point can provide a beacon to a station with information about BPE access points that are available in a network. After the station associates with the CPE access point, the station can provide a BTM query for information about desired neighborhood and collocated BPE access points. In response, the CPE access point can provide a BTM request that includes an RNR with information specifying legacy, CPE and/or BPE access points. Alternatively or additionally, the station can request a complete set of BPE access point information, such as: a current BSS identifier (BSSID) of a BPE access point. In response, the CPE access point can provide BPE access point information, such as: a complete set of access point information.

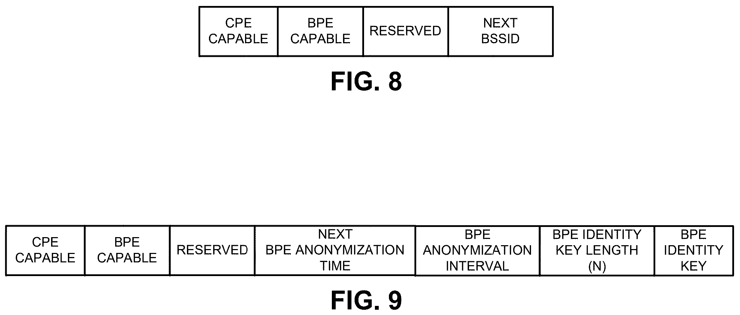

In some embodiments, a CPE and BPE information field can be included in the RNR. This is shown in FIG. 8, which presents a drawing illustrating an example of a CPE and BPE access point information field for an RNR. Notably, the CPE and BPE information field can include: a CPE capability subfield (e.g., using one bit); a BPE capability subfield (e.g., using one bit); reserved bits (e.g., six bits); and/or a next BSSID (e.g., using 0 or 48 bits).

Note that an associated station may not be configured to operate with a BPE access point. The station cannot detect the BPE access point(s), because the station does not have Identity Key(s) of the BPE access point(s). Consequently, the associated station can request available BPE access point MLD information carried in an RNR through a serving access point MLD. The station can obtain the RNR information of the BPE access point MLD, which can enable the station to: estimate BPE access point suitability for roaming; and/or identify the affiliated BPE access points through the current and the next temporary BSSID. Moreover, the other RNR parameters can be as defined in IEEE 802.11-24/1879r1. Notably, the station can obtain: BPE access point identification information (e.g., a current BSSID, a next BSSID, a short SSID, an SMD identifier, an MD identifier, an operating channel, a target beacon transmission time or TBTT); detect the supported authentication and key management; the BSS load, whether association is allowed, a BSS operating bandwidth, a number of spatial streams (NSS), etc. When a reported BPE access point is suitable roaming candidate access point, the station can: request a complete set of the BPE access point parameters; and/or request roaming/transition to the BPE access point.

Moreover, FIG. 9 presents a drawing illustrating an example of BPE access point information field for an RNR. In order to facilitate discovery, the complete BPE discovery information can include information that is added to the complete set of the access point MLD parameters. For example, the BPE access point discovery information can be provided to associated stations in a protected unicast frame. The information can be added to the RNR and/or it can be added to the MLD level parameters of the multi-link element. The CPE capable field can be set to indicate that reported access point is CPE capable. Furthermore, the BPE capable field can be set to indicate that a reported access point is BPE capable. For BPE access points, the BPE parameters that are set can include: the next BPE anonymization time, which can be the time to the next BPE access point anonymization event in units of time units (TUs); the BPE anonymization interval, which can define the interval; and/or the BPE identity key length (N) and the BPE identity key, which can define the identity key of the access point. Note that the key for the BPE access point MLD may have been pre-shared with the station prior to the discovery in FIG. 7.

In some embodiments, the complete set of BPE access point information can include: a CPE capable subfield (e.g., one bit); a BPE capable subfield (e.g., one bit); reserved bits (e.g., six bits); a next BPE anonymization time (e.g., 0 or 16 bits); a BPE anonymization interval (e.g., 0 or 16 bits); a BPE identity key length or N (e.g., 0 or 16 bits); and/or a BPE identity key (e.g., 0 or N bits).

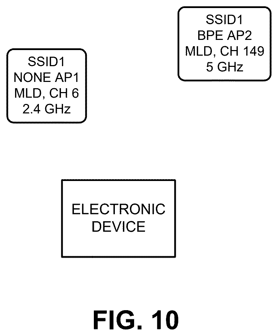

Moreover, FIG. 10 presents a drawing illustrating an example of communication between the electronic devices of FIG. 1 or 2. In FIG. 10, an updated RNR information can facilitate easy access point discovery for one or more pre-shared station(s). Notably, a station can be pre-shared with BPE access point information. Scanning information obtained from access point 1 (AP1) can allow a station to discover the operating channel of access point 2, but may not reveal the identity key of access point 2, etc. This can save station power to directly get a report of available access points.

Currently, a station needs to discover available BPE access points by scanning over the air. However, over-the-air scanning consumes station power, because the station needs to operate a radio for different channels. Wi-Fi 6e started to offer out-of-band information for the stations" an access point in the 2.4 GHz or 5 GHz band of frequencies can indicate availability of the 6 GHz access points(s); and the RNR can contain parameters of these access points. A BPE access point can identify the channels that contain BPE access points. For example, the BPE access points BSSID, identity hash and operating channel can be listed. An update field can indicate whether the BPE information is updated in the last X seconds. When the information is not updated, a station may need to check whether the access point address is currently in use. Other information may not be provided for the advertised access points. In order to collect information about other access point(s), the associated access point can request an associated station to perform beacon measurements. The beacon measurement response can include detected access point(s) parameters. For BPE access point MLDs, the information can include: BPE access point(s) BSSID and identity hash values; and/or a channel in which the BPE access point operates.

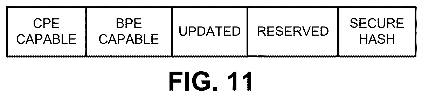

FIG. 11 presents a drawing illustrating an example of BPE access point information field for an RNR. The BPE information field for the RNR can include: a CPE capable subfield (e.g., one bit); a BPE capable subfield (e.g., one bit); an updated subfield (e.g., one bit); reserved bits (e.g., five bits); and/or a secure hash (e.g., 0 or 48 bits).

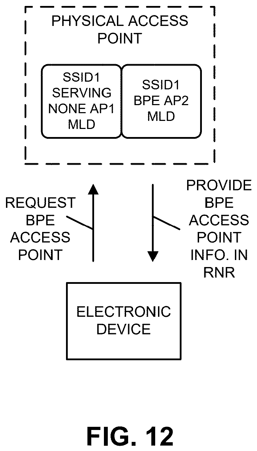

An example of on-demand BPE access point activation is shown in FIG. 12, which presents a drawing illustrating an example of communication between the electronic devices of FIG. 1 or 2. Notably, a physical access point can include a serving access point 1 MLD without WLAN privacy support, and a BPE access point 2 MLD. A station can provide a request for BPE access point information to access point 1 MLD. In response, access point 1 MLD can provide BPE access information in an RNR. Note that when a station does not associate with BPE access point 2 MLD, BPE access point 2 MLD can be operated for the duration indicated in the RNR.

Note that, in operation model 1, an associated BPE capable non-access point MLD may desire to operate in access point MLD. The BPE non-access point MLD can request available access point MLDs from its serving access point MLD. The non-access point MLD can specify an access point in the SMD for which the proximate BPE access point MLD can be discovered. When no BPE access point MLDs are operating in proximity of the serving access point or the specified access point, the serving access point MLD or the specified access point can activate a new BPE access point MLD. Note that the new BPE access point can operate at least for the duration of the epochs signaled in the RNR.

Alternatively or addition, in operation mode 2, some Internet-of-things (IoT) device pairing techniques can create a temporary access point without or with CPE privacy enhancements. The IoT device can discover the access point and be visible to the access point as a station. The IoT device can associate and authenticate with the temporary access point and it can be moved to the BPE access point. Note that the temporary access point operation can be stopped after the IoT device has transition to use the BPE access point.

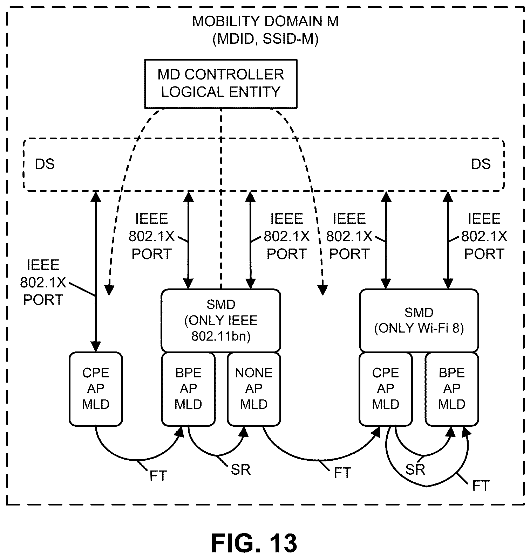

The architecture of an MD or ESS with legacy, CPE and BPE access point MLDs is shown in FIG. 13, which presents a drawing illustrating an example of a network architecture. Notably, currently, an MD or an SMD can contain only access point MLDs without privacy support. Moreover, currently only the authentication with a BPE access point is defined in IEEE 802.11bi D0.1. Support for FT and SR to a BPE access point MLD needs to be added.

In the disclosed communication techniques, SMD and MD can include legacy, CPE and BPE access point MLDs. SR is possible in SMD regardless of the access point MLDs privacy capabilities. Moreover, FT is possible in MD regardless of the access point MLDs privacy capabilities. The signaling can use protected reassociation frames. The BPE access point MLD privacy information can be signaled by the BPE access point in the protected reassociation response frame.

Note that the access points in an SMD can be ultra-high reliability (UHR) and Wi-Fi 8 capable. An FT can occur between a CPE access point MLD and a BPE access point MLD, which is in an SMD that is compatible with IEEE 802.11 bn. Moreover, within this SMD, SR can occur between the BPE access point MLD and an access point MLD without IEEE 802.11bi privacy support. Further, the access point MLD can perform an FT to a CPE access point MLD in an SMD that supports Wi-Fi 8. This CPE access point MLD can perform an SR or an FT to an BPE access point MLD in the SMD that supports Wi-Fi 8. In some embodiments, the SR and/or FT can be facilitated by an MD controller. Note that BPE access points may only be discoverable for BPE stations.

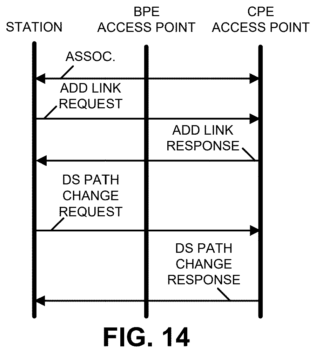

Moreover, FIG. 14 presents a drawing illustrating an example of communication between the electronic devices of FIG. 1 or 2. Notably, FIG. 14 illustrates SR to a BPE access point. Notably, a link setup with a BPE access point MLD can contain the following parameters: the non-AP MLD anonymization parameters (or station specific CPE parameters); association identifier (AID) assignments for the station for the next epochs; and/or the access point MLD anonymization parameters (such as BSS specific BPE parameters). These parameters can be defined in the IEEE 802.11bi standard for the authentication and association.

Note that the address anonymization can be periodically performed on an ongoing basis in some or all links with the BPE access point MLD or the CPE access point MLD. During roaming, different access point MLDs can have different anonymization periodicity. A station can calculate some or all of the address values, except the AID, which can be assigned. When the station does not roam to the access point before the AID values are consumed, the station can obtain new AID values.

Furthermore, address anonymization may not modify encrypted data payload. A data frame initial transmission and retransmission can use the same addresses to ensure that eavesdroppers cannot detect old and new access points. When the pairwise transient key (PTK) or nonce of the data payload are changed in roaming, data can be transmitted in the roaming target access point.

In some embodiments, a station can associate to a CPE access point. Then, the station can add a link request (with BPE non-access point MLD parameters and/or non-access point specific link setup parameters) to the CPE access point. In response, the CPE access point can add a link response (with BPE access point MLD anonymization parameters and/or access point specific link setup information). Next, the station can provide or transmit a distribution system (DS) path change request (with no changes), and the CPE access point can provide or transmit a DS path change response (with no changes).

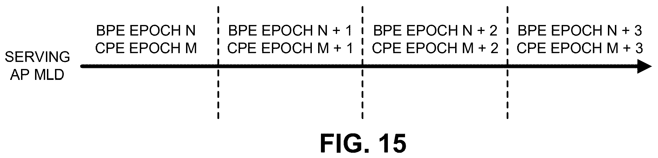

FIG. 15 presents a drawing illustrating an example of epochs associated with a CPE calculation. Notably, FIG. 15 shows a CPE anonymization calculation, which can be performed in different epochs by a serving access point MLD. The CPE stations can calculate frame anonymization for STA specific unicast frames. The CPE anonymization parameters may be known only to these two electronic devices. The CPE anonymizes the station over-the-air address, serial number (SN) and packet number (PN). Moreover, the BPE stations can calculate frame anonymization for: station specific unicast frames (with the same anonymization used for CPE stations); and/or the BPE anonymization can be for access point BSSIDs and group addressed frames. Note that both CPE and BPE anonymization parameters can be used for a given epoch duration. Currently, the handling of the CPE and BPE anonymization parameters are not defined for roaming and FT operations.

Furthermore, CPE anonymizations can create, for non-access point stations, over-the-air MAC addresses, SN and PN. Notably, a single hash calculation can create some or all over-the-air addresses for some or all links regardless of which links a station operates. For example, for a given Enhanced Data Privacy (EDP) epoch, an EDP frame anonymization (FA) block (a block of random bits that can be used to randomize addresses, a sequence number and a packet number) can be generated as the KDF-Hash-Length(KDK, "EDP CPE frame anonymization", n), where the EDP FA block is the block of bits that is partitioned into the sets of some or all possible vales for each EDP frame anonymization parameters, the KDF-Hash-Length is the key derivation function using a hash technique identified by the authentication and key management (AKM) suite selector, KDK is the key derivation key, n is the current number of the EDP epoch in the EDP epoch sequence, and length is the total number of bits to derive (a total of 1,728 bits can be derived for an EDP FA block).

Note that the EDP_PN_offset values can be extracted from the EDP FA block, the EDP_STA_address values can be extracted from the EDP FA block, and EDP_SN_offset values for SNS1, SNS3, SNS9, SNS10 and SNS12 can be extracted from the EDP FA block.

In some embodiments, in a given 48-bit sub-block of an EDP FA block (such as bits 96-143), 46 bits can specify the EDP access point address for a given link identifier, and the remaining two bits may be reserved.

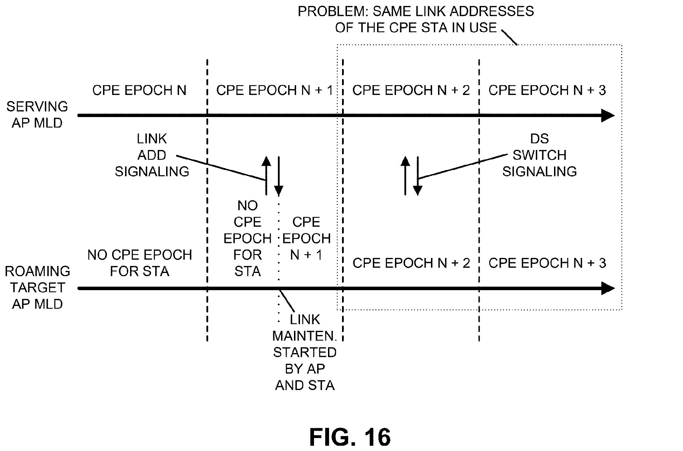

Additionally, FIG. 16 presents a drawing illustrating an example of communication between the electronic devices of FIG. 1 or 2. In particular, CPE anonymization in roaming can be a challenge. Notably, the serving access point MLD can provide CPE in different epochs. However, the roaming target access point MLD may not provide CPE for the station until link add signaling occurs. Then, when DS switch signaling occurs (such as in CPE epoch n+2), the same link addresses of the CPE station can be used by the serving access point MLD and the roaming target access pint MLD.

The challenge is that currently a CPE station roaming and FT are not defined. IEEE 802.11bn allows a CPE station to inherit the same pairwise transient key security association (PTKSA) as the current access point. However, the current CPE anonymization rule has only 2 parameters: the key derivation key (KDK) and the CPE epoch number (n). When the roaming target access point MLD inherits the KDK, then the current serving access point MLD and the roaming target access point MLD can create the same addresses for the same CPE epoch number (n). Consequently, the same Link addresses can reveal the roaming access point to eavesdroppers. This can allow tracking of the roaming CPE station.

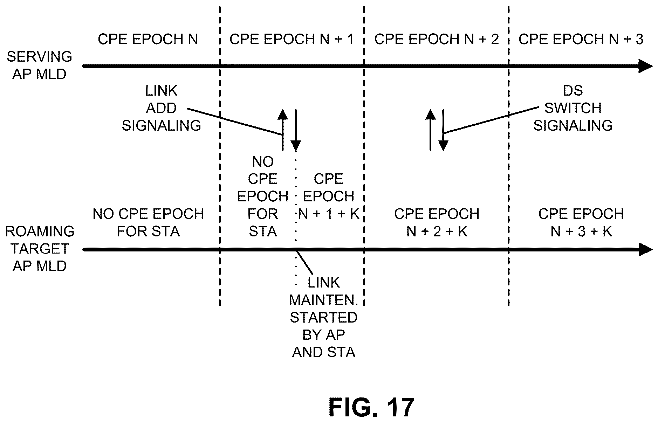

FIG. 17, which presents a drawing illustrating an example of communication between the electronic devices of FIG. 1 or 2, illustrates CPE anonymization in roaming in the disclosed communication techniques. Notably, link maintenance can be started by the access point and the station following the link add signaling to prevent the same link address being used by the serving access point MLD and the roaming target access point MLD. In the current rule for computing an EDP FA block, it is unclear whether a concatenation operation is used. In the disclosed communication techniques, ∥ is a concatenation operation. Thus, the EDP FA block equals KDF-Hash-Length(KDK, "EDP CPE frame anonymization" ∥ n ∥ L-AP ∥ L-STA ∥ MLD-STA-Address ∥ MLD-AP-Address), where L is the roaming number (which can be a single number or two numbers for station and access point specific values), MLD-STA-Address is the MLD address of the station, and MLD-AP-Address is the MLD address of the access point.

For example, an access point can signal a CPE epoch number delta to new access point (K). K can be a positive integer set to a value that provides time to transition to the roaming target access point MLD.

When the station has multiple roaming the EDP FA block calculation rule can include station and access point identifiers (such as: the MLD addresses of the access point and station, and/or a station-specific roaming number or L). Note that, in a ping-pong roaming, the MLD addresses of the access point and the station may have challenges, because the station may need to roam fast to the same access points. Moreover, the station-specific roaming number can be added to the calculation, and the access point and the station can define a roaming number. Furthermore, when the station has multiple roaming: the KDK key can be renewed in the roaming (renewing the KDK can allow the station to continue use of the same epoch number) and/or the association identifier values assigned to the station can continue from the epoch number, or the roaming target access point can assign new association identifier values for the station.

Note that the add link request frame, which can alternatively be a multi-link reconfiguration frame, from the station can specify the epoch parameters that the station would like to use for the links of the roaming target access point MLD. The station can request a specific epoch duration or epoch identifier that it would like to use with the CPE access point MLD. The access point can provide in the link add response, which can alternatively be a multi-link reconfiguration response frame, with the group epoch details (such as the group interval, periodicity, and/or a group-specific common key for the epoch start time variation calculation), and the access point can assign association identifier values for the station in the following epochs.

In some embodiments of link add signaling, the station and access point can rekey their encryption keys for the new link. The rekeying can be done by using ephemeral Diffie-Hellman public keys and using pre-association security negotiation (PASN) signaling. When the rekeying is performed, the station and access point can also derive a new KDK that can be used to calculate frame anonymization parameters.

The BTM request can include detailed information of the group epochs ongoing in the CPE access point. This can help the station to request the group epoch that it desires to operate in the new link(s).

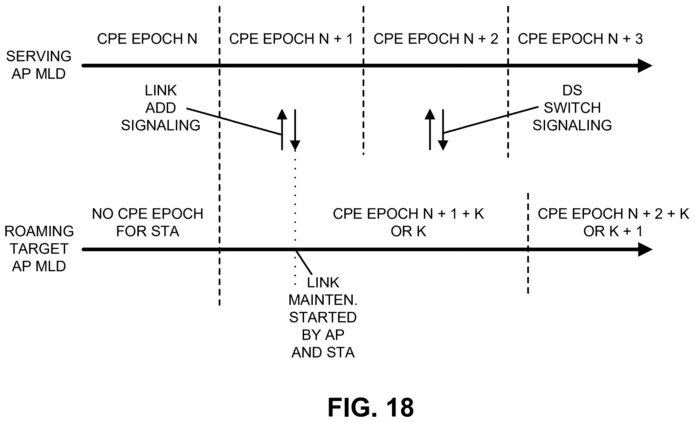

Moreover, FIG. 18, which presents a drawing illustrating an example of communication between the electronic devices of FIG. 1 or 2, shows different timings for BPE anonymization in roaming. Notably, the serving access point MLD can provide CPE in different epochs. However, the roaming target access point MLD may not provide CPE for the station until link add signaling occurs. As discussed previously, link maintenance can then be started by the access point and the station. Moreover, the CPE epoch of the roaming target access point MLD can be different from the CPE epoch of the serving access point MLD. This can help ensure that, when DS switch signaling occurs (such as in CPE epoch n+2), the same link addresses of the CPE station is not used by the serving access point MLD and the roaming target access point MLD.

In some embodiments of the disclosed communication techniques, the serving access point and the roaming target access point MLD can have: a different epoch interval; and/or a different epoch start time. The CPE value can be configured at the time of link add response signaling. Both the serving access point and roaming target access point can maintain epoch timings independently. When the station needs to send or transmit directly to the access point, the station can use the address that is used at a time in the new access point. Moreover, when the same KDK and current address anonymization calculation is used in both access points, the epoch number offset K value can be used to configure different epochs for the serving access point and roaming target access point(s). Note that the K value can be long enough to ensure that addresses do not collide even when the roaming is delayed. Thus, buffered downlink frames received from the serving access point can have different addresses as in the new access point.

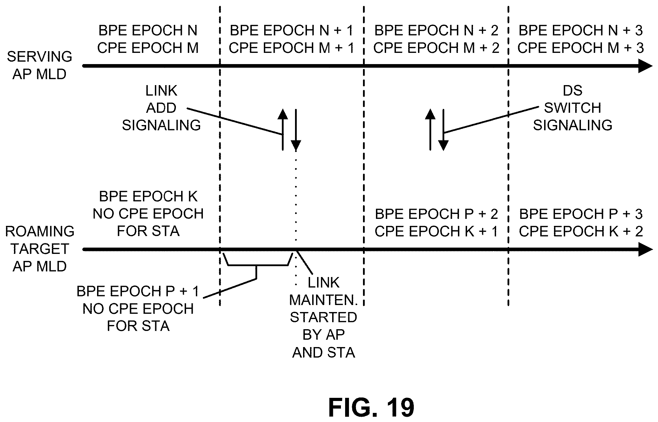

Furthermore, FIG. 19, which presents a drawing illustrating an example of communication between the electronic devices of FIG. 1 or 2, shows BPE anonymization used in roaming. Currently BPE parameters need to signal: a PGTK (privacy group transient key), an access point MLD specific key, a group epoch number, a joint epoch number that is used by some or all stations, and/or an EDP epoch interval and start time (when the EDP epoch is ongoing). The PGTK, the epoch number of the access point, the epoch interval and the epoch start times can be signaled in roaming to the stations. Moreover, the BPE epoch number and CPE epoch number can be increased at the same time. However, the BPE and CPE epoch numbers can have different values.

Additionally, BPE anonymization can create over-the-air BSSID addresses for access points and offsets for group addressed frames. A single hash calculation can create the over-the-air addresses for some or all links regardless of which links the station operates.

For example, for a given EDP epoch, an EDP BPE FA block be generated as the KDF-Hash-Length(PGTK, "EDP BPE frame anonymization", n), where the KDF-Hash-Length is the key derivation function using a hash technique identified by the AKM suite selector, PGTK is the privacy group transient key, and n is the current number of the EDP epoch in the EDP epoch sequence.

In order to provide SMD friendly BPE access point anonymization: the MLD address of the access point MLD allows some or all access points to use the same key; and/or in some deployments, the MLD address is appended to the PTGK as an implementation-specific solution. This can allow specification compatibility, because the key can be signaled without changes to the station implementation. Note that EDP BPE FA block can be given by KDF-Hash-Length (PGTK, "EDP CPE frame anonymization" ∥ MLD-AP-Address ∥ n), where MLD -AP Address is the MLD address of the access point. By adding this field to the calculation, the access point can reduce the number of required hash calculations, because some or all of the parameters can be calculated in a single hash. This can also reduce the station power consumption, because the station needs to perform fewer operations to anonymize addresses and other fields. In some embodiments, in a given 48-bit sub-block of an EDP FA block (such as bits 48-95), 46 bits can specify the EDP access point address for a given link identifier, and the remaining two bits can be reserved.

Note that the add link request frame transmitted by the station to the BPE access point MLD may not contain epoch parameters. The access point can provide, in the link add response, the group epoch details that the station will be using in the link(s), and it can contain association identifier values for the station in the following epochs. The link add response can also contain the BPE access point MLD specific key to encrypt the group epoch.

The station and BPE access point can use link add signaling to rekey their encryption keys for the new link. The rekeying can be done by using ephemeral Diffie-Hellman public keys and using PASN signaling. When the rekeying is performed, the station and access point can also derive a new KDK that can be used to calculate frame anonymization parameters for the unicast frames.

IEEE 802.11bi can provide different privacy modes. Notably, BSS parameters pre-sharing is not needed in an access point without privacy, a legacy access point MLD or a CPE access point MLD. For a BPE access point MLD, BSS parameters pre-sharing is required (including the identity key, a robust security network element or RSNE and RSNXE). Moreover, in an access point without privacy, a legacy access point MLD or a CPE access point MLD, for BSS discovery using active or passive scanning, access point parameters can be transmitted clear and over-the air. Alternatively, for a BPE access point MLD, encrypted BSS parameters are transmitted (so they are not available clear and over-the-air). Access point discovery through privacy beacons is only possible when stations have pre-shared parameters. Note that BSS parameter pre-sharing is only required for BPE. Even non-mobile access points can be more difficult to follow when the BSS parameters are changing routinely or continuously.

Moreover, for the privacy of individually addressed frames, no anonymization is needed for an access point without privacy or a legacy access point MLD (associated station addresses are fixed). For a CPE access point MLD, unicast traffic is anonymized (the access point address is fixed). For a BPE access point MLD, for the privacy of individually addressed frames, unicast traffic is anonymized (and the access point addresses change). Note that CPE and BPE have a similar level of privacy protection.

Furthermore, for the privacy of group addressed frames, no anonymization is needed for an access point without privacy, a legacy access point MLD or a CPE access point MLD, there is no anonymization (destination and source addresses are visible, and an Internet Protocol or IP multicast address is visible over the air). For a BPE access point MLD, multicast addresses are anonymized (destination and source addresses are not visible, and an IP multicast address is not visible over the air). Note that only the BPE access point MLD has protection. Destination and source addresses can be visible the group-addressed frame headers, which can enable CPE station tracking.

Additionally, there is no anonymization of epochs for an access point without privacy or a legacy access point MLD. For a CPE access point MLD, the BSS can have multiple epochs (so stations can change addresses at different times). For a BPE access point MLD, the BSS can have a single periodicity for address anonymization of the access point and associated stations. Note that a single anonymization interval can be sufficient in one or more of the modes.

Thus, a BPE access point can provide better privacy. Notably, the group frames privacy can be improved: the destination and source addresses do not leak from the group frames MAC headers; and/or the group address cannot be used to determine the IP address from which the frames are transmitted. Note that available BPE networks may not be detected by eavesdropping stations (because there is no knowledge of the network name, type or characteristics). Changing access-point addresses and parameters can make access point and station tracking more difficult.

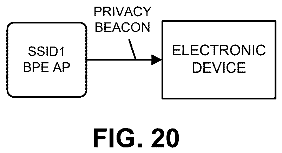

FIG. 20, which presents a drawing illustrating an example of communication between the electronic devices of FIG. 1 or 2, shows BPE access point MLD identification using privacy beacons. Notably, BPE access points can transmit privacy beacons that contain an identity hash. The privacy beacon receivers can calculate identity keys for known access points to determine whether they can identify the access point. When the calculation matches, the stations have identified the access point and can authenticate and associate with pre-shared parameters. Alternatively, when none of the identity keys used by the station match, then the access point is not identified and the stations do not know to which network, the access point belongs. Note that the privacy beacon payload can be encrypted and only associated stations can decrypt it. Identification of the BPE access point can be the first operation to check whether the station can authenticate and associate. In some embodiments, in order to be able to discover and authenticate with the BPE access points, the following parameters can be used: the identity key of the BPE access point; and/or the RSNE and RSNXE of the BPE access point to set the correct authentication parameters.

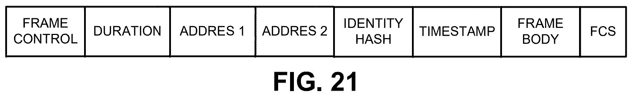

FIG. 21 presents a drawing illustrating an example of a privacy beacon frame format. The privacy beacon frame format can include: a frame control (e.g., two octets), a duration (e.g., two octets), an address 1 (e.g., six octets), an address 2 (e.g., six octets), an identity hash (e.g., six octets), a timestamp (e.g., eight octets), a frame body (e.g., with a variable number of octets), and/or a frame control sequence or FCS (e.g., with four octets). Note that the identity hash can be truncate-48(HMAC-SGA-256("BPE AP MLD address resolution", identity key, address 2), where the identity hash is the value of the identity hash field of the privacy beacon, the identity key is the 128-bit identifier of the tested access point MLD, and address 2 is the A2 field of the privacy beacon.

In some embodiments, the communication techniques can be implemented in a physical layer and/or a MAC layer.

Note that the formats of packets or frames communicated during the communication techniques can include more or fewer bits, subfields or fields. Alternatively or additionally, the position of information in these packets or frames can be changed. Thus, the order of the subfields or fields can be changed.

While the preceding embodiments illustrate embodiments of the communication techniques using frequency sub-bands, in other embodiments the communication techniques can involve the concurrent use of different temporal slots, and/or or a combination of different frequency sub-bands, different frequency bands and/or different temporal slots. In some embodiments, the communication techniques can use OFDMA.

Moreover, while the preceding embodiments illustrated the use of Wi-Fi during the communication techniques, in other embodiments of the communication techniques Bluetooth or Bluetooth Low Energy is used to communicate at least a portion of the information in the communication techniques. Furthermore, the information communicated in the communication techniques can be communicated or can occur in one or more frequency bands, including: 900 MHz, a 2.4 GHz frequency band, a 5 GHz frequency band, a 6 GHz frequency band, a 7 GHz frequency band, a 60 GHz frequency band, a Citizens Broadband Radio Service (CBRS) frequency band, a band of frequencies used by LTE or another data communication protocol, etc.

As described herein, aspects of the present technology can include the gathering and use of data available from various sources, e.g., to improve or enhance functionality. The present disclosure contemplates that in some instances, this gathered data can include personal information data that uniquely identifies or can be used to contact or locate a specific person. Such personal information data can include demographic data, location-based data, telephone numbers, email addresses, Twitter ID's, home addresses, data or records relating to a user's health or level of fitness (e.g., vital signs measurements, medication information, exercise information), date of birth, or any other identifying or personal information. The present disclosure recognizes that the use of such personal information data, in the present technology, can be used to the benefit of users.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should only occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of, or access to, certain health data can be governed by federal and/or state laws, such as the Health Insurance Portability and Accountability Act (HIPAA); whereas health data in other countries can be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology can be configurable to allow users to selectively "opt in" or "opt out" of participation in the collection of personal information data, e.g., during registration for services or anytime thereafter. In addition to providing "opt in" and "opt out" options, the present disclosure contemplates providing notifications relating to the access or use of personal information. For instance, a user can be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification can be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure can broadly cover use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

We now describe embodiments of an electronic device. FIG. 22 presents a block diagram of an electronic device 2200 (which can be a cellular telephone, a smartwatch, an access point, a wireless speaker, an IoT device, another electronic device, etc.) in accordance with some embodiments. This electronic device includes processing subsystem 2210, memory subsystem 2212 and networking subsystem 2214. Processing subsystem 2210 includes one or more devices configured to perform computational operations. For example, processing subsystem 2210 can include one or more microprocessors, application-specific integrated circuits (ASICs), microcontrollers, graphics processing units (GPUs), programmable-logic devices, and/or one or more digital signal processors (DSPs).

Memory subsystem 2212 includes one or more devices for storing data and/or instructions for processing subsystem 2210, and/or networking subsystem 2214. For example, memory subsystem 2212 can include dynamic random access memory (DRAM), static random access memory (SRAM), a read-only memory (ROM), flash memory, and/or other types of memory. In some embodiments, instructions for processing subsystem 2210 in memory subsystem 2212 include: program instructions or sets of instructions (such as program instructions 2222 or operating system 2224), which can be executed by processing subsystem 2210. For example, a ROM can store programs, utilities or processes to be executed in a non-volatile manner, and DRAM can provide volatile data storage, and can store instructions related to the operation of electronic device 2200. Note that the one or more computer programs can constitute a computer-program mechanism, a computer-readable storage medium or software. Moreover, instructions in the various modules in memory subsystem 2212 can be implemented in: a high-level procedural language, an object-oriented programming language, and/or in an assembly or machine language. Furthermore, the programming language can be compiled or interpreted, e.g., configurable or configured (which can be used interchangeably in this discussion), to be executed by processing subsystem 2210. In some embodiments, the one or more computer programs are distributed over a network-coupled computer system so that the one or more computer programs are stored and executed in a distributed manner.

In addition, memory subsystem 2212 can include mechanisms for controlling access to the memory. In some embodiments, memory subsystem 2212 includes a memory hierarchy that includes one or more caches coupled to a memory in electronic device 2200. In some of these embodiments, one or more of the caches is located in processing subsystem 2210.

In some embodiments, memory subsystem 2212 is coupled to one or more high-capacity mass-storage devices (not shown). For example, memory subsystem 2212 can be coupled to a magnetic or optical drive, a solid-state drive, or another type of mass-storage device. In these embodiments, memory subsystem 2212 can be used by electronic device 2200 as fast-access storage for often-used data, while the mass-storage device is used to store less frequently used data.

Networking subsystem 2214 includes one or more devices configured to couple to and communicate on a wired and/or wireless network (i.e., to perform network operations), such as: control logic 2216, one or more interface circuits (or interface circuitry) 2218 and a set of antennas 2220 (or antenna elements) in an adaptive array that can be selectively turned on and/or off by control logic 2216 to create a variety of optional antenna patterns or 'beam patterns.' Alternatively, instead of the set of antennas, in some embodiments electronic device 2200 includes one or more nodes 2208, e.g., a pad or a connector, which can be coupled to the set of antennas 2220. Thus, electronic device 2200 may or may not include the set of antennas 2220. For example, networking subsystem 2214 can include a Bluetooth^{™} networking system, a cellular networking system (e.g., a 3G/4G/5G network such as UMTS, LTE, etc.), a universal serial bus (USB) networking system, a networking system based on the standards described in IEEE 802.12 (e.g., a Wi-Fi^{®} networking system), an Ethernet networking system, and/or another networking system.

In some embodiments, networking subsystem 2214 includes one or more radios, such as a wake-up radio that is used to receive wake-up frames and wake-up beacons, and a main radio that is used to transmit and/or receive frames or packets during a normal operation mode. The wake-up radio and the main radio can be implemented separately (such as using discrete components or separate integrated circuits) or in a common integrated circuit.

Networking subsystem 2214 includes processors, controllers, radios/antennas, sockets/plugs, and/or other devices used for coupling to, communicating on, and handling data and events for each supported networking system. Note that mechanisms used for coupling to, communicating on, and handling data and events on the network for each network system are sometimes collectively referred to as a 'network interface' for the network system. Moreover, in some embodiments a 'network' or a 'connection' between the electronic devices does not yet exist. Therefore, electronic device 2200 can use the mechanisms in networking subsystem 2214 for performing simple wireless communication between the electronic devices, e.g., transmitting advertising or frame frames and/or scanning for advertising frames transmitted by other electronic devices.

Within electronic device 2200, processing subsystem 2210, memory subsystem 2212 and networking subsystem 2214 are coupled together using bus 2228 that facilitates data transfer between these components. Bus 2228 can include an electrical, optical, and/or electro-optical connection that the subsystems can use to communicate commands and data among one another. Although only one bus 2228 is shown for clarity, different embodiments can include a different number or configuration of electrical, optical, and/or electro-optical connections among the subsystems.

In some embodiments, electronic device 2200 includes a display subsystem 2226 for displaying information on a display, which can include a display driver and the display, such as a liquid-crystal display, a multi-touch touchscreen, etc. Display subsystem 2226 can be controlled by processing subsystem 2210 to display information to a user (e.g., information relating to incoming, outgoing, or an active communication session).

Moreover, electronic device 2200 can also include a user-input subsystem 2230 that allows a user of the electronic device 2200 to interact with electronic device 2200. For example, user-input subsystem 2230 can take a variety of forms, such as: a button, keypad, dial, touch screen, audio input interface, visual/image capture input interface, input in the form of sensor data, etc.

Electronic device 2200 can be (or can be included in) any electronic device with at least one network interface. For example, electronic device 2200 can include: a cellular telephone or a smartphone, a tablet computer, a laptop computer, a notebook computer, a personal or desktop computer, a netbook computer, a media player device, a wireless speaker, an IoT device, an electronic book device, a MiFi^{®} device, a smartwatch, a wearable computing device, a portable computing device, a consumer-electronic device, a vehicle, a door, a window, a portal, an access point, a router, a switch, communication equipment, test equipment, as well as any other type of electronic computing device having wireless communication capability that can include communication via one or more wireless communication protocols.

Although specific components are used to describe electronic device 2200, in alternative embodiments, different components and/or subsystems can be present in electronic device 2200. For example, electronic device 2200 can include one or more additional processing subsystems, memory subsystems, networking subsystems, and/or display subsystems. Additionally, one or more of the subsystems may not be present in electronic device 2200. Moreover, in some embodiments, electronic device 2200 can include one or more additional subsystems that are not shown in FIG. 22. In some embodiments, electronic device 2200 can include an analysis subsystem that performs at least some of the operations in the communication techniques. Also, although separate subsystems are shown in FIG. 22, in some embodiments some or all of a given subsystem or component can be integrated into one or more of the other subsystems or component(s) in electronic device 2200. For example, in some embodiments program instructions 2222 are included in operating system 2224 and/or control logic 2216 is included in the one or more interface circuits 2218.

Moreover, the circuits and components in electronic device 2200 can be implemented using any combination of analog and/or digital circuitry, including: bipolar, PMOS and/or NMOS gates or transistors. Furthermore, signals in these embodiments can include digital signals that have approximately discrete values and/or analog signals that have continuous values. Additionally, components and circuits can be single-ended or differential, and power supplies can be unipolar or bipolar.

An integrated circuit can implement some or all of the functionality of networking subsystem 2214. This integrated circuit can include hardware and/or software mechanisms that are used for transmitting wireless signals from electronic device 2200 and receiving signals at electronic device 2200 from other electronic devices. Aside from the mechanisms herein described, radios are generally known in the art and hence are not described in detail. In general, networking subsystem 2214 and/or the integrated circuit can include any number of radios. Note that the radios in multiple-radio embodiments function in a similar way to the described single-radio embodiments.

In some embodiments, networking subsystem 2214 and/or the integrated circuit include a configuration mechanism (such as one or more hardware and/or software mechanisms) that configures the radio(s) to transmit and/or receive on a given communication channel (e.g., a given carrier frequency). For example, in some embodiments, the configuration mechanism can be used to switch the radio from monitoring and/or transmitting on a given communication channel to monitoring and/or transmitting on a different communication channel. (Note that 'monitoring' as used herein includes receiving signals from other electronic devices and possibly performing one or more processing operations on the received signals).

In some embodiments, an output of a process for designing the integrated circuit, or a portion of the integrated circuit, which includes one or more of the circuits described herein can be a computer-readable medium such as, for example, a magnetic tape or an optical or magnetic disk. The computer-readable medium can be encoded with data structures or other information describing circuitry that can be physically instantiated as the integrated circuit or the portion of the integrated circuit. Although various formats can be used for such encoding, these data structures are commonly written in: Caltech Intermediate Format (CIF), Calma GDS II Stream Format (GDSII), Electronic Design Interchange Format (EDIF), OpenAccess (OA), or Open Artwork System Interchange Standard (OASIS). Those of skill in the art of integrated circuit design can develop such data structures from schematic diagrams of the type detailed above and the corresponding descriptions and encode the data structures on the computer-readable medium. Those of skill in the art of integrated circuit fabrication can use such encoded data to fabricate integrated circuits that include one or more of the circuits described herein.

While the preceding discussion used a Wi-Fi communication protocol as an illustrative example, in other embodiments a wide variety of communication protocols and, more generally, wireless communication techniques can be used. Thus, the communication techniques can be used in a variety of network interfaces. Furthermore, while some of the operations in the preceding embodiments were implemented in hardware or software, in general the operations in the preceding embodiments can be implemented in a wide variety of configurations and architectures. Therefore, some or all of the operations in the preceding embodiments can be performed in hardware, in software or both. For example, at least some of the operations in the communication techniques can be implemented using program instructions 2222, operating system 2224 (such as a driver for an interface circuit in networking subsystem 2214) or in firmware in an interface circuit networking subsystem 2214. Alternatively or additionally, at least some of the operations in the communication techniques can be implemented in a physical layer, such as hardware in an interface circuit or interface circuitry in networking subsystem 2214. In some embodiments, the communication techniques are implemented, at least in part, in a MAC layer and/or in a physical layer in an interface circuit in networking subsystem 2214.

Note that the use of the phrases 'capable of,' 'capable to,' 'operable to,' or 'configured to' in one or more embodiments, refers to some apparatus, logic, hardware, and/or element designed in such a way to enable use of the apparatus, logic, hardware, and/or element in a specified manner.

While examples of numerical values are provided in the preceding discussion, in other embodiments different numerical values are used. Consequently, the numerical values provided are not intended to be limiting.

Moreover, while the preceding embodiments illustrated the use of wireless signals in one or more bands of frequencies, in other embodiments of the communication techniques electromagnetic signals in one or more different frequency bands are used. For example, these signals can be communicated in one or more bands of frequencies, including: a microwave frequency band, a radar frequency band, 900 MHz, 2.4 GHz, 5 GHz, 6 GHz, 60 GHz, and/or a band of frequencies used by a Citizens Broadband Radio Service or by LTE.

In the preceding description, we refer to 'some embodiments. Note that 'some embodiments' describes a subset of all of the possible embodiments, but does not always specify the same subset of embodiments.

Exemplary methods, electronic devices, wireless devices, non-transitory computer-readable storage media, and non-volatile computer-readable media are set out in the following items.
1. An electronic device, comprising:
   an antenna node configured to communicatively couple to an antenna; and
   one or more interface circuits, communicatively coupled to the antenna node, wherein the one or more interface circuits are configured to:
      receiving, associated with a second electronic device, a beacon or a probe response that indicates a presence of at least another electronic device with a basic service set (BSS) privacy enhancement (BPE) capability in a network;
      associating and authenticating with the second electronic device, wherein, during or after the association or the authentication, the electronic device indicates a BPE capability of the electronic device; and
      receiving, associated with the second electronic device, a unicast management frame recommending that the electronic device transition to a link associated with the other electronic device and having the BPE capability.
2. The electronic device of item 1, wherein the second electronic device comprises a BPE access point multi-link device (MLD).
3. The electronic device of item 2, wherein, after the association and the authentication, the one or more interface circuits are configured to provide, addressed to the second electronic device, a BSS transition management (BTM) query, and
   wherein the BTM query requests information specifying the BPE capability of the other electronic device.
4. The electronic device of any preceding item, wherein the unicast management frame comprises a BTM request.
5. The electronic device of any preceding item, wherein the second electronic device comprises a BPE access point multi-link device (MLD), and the link is provided by the second electronic device.
6. The electronic device of any preceding item, wherein the link is provided by a third electronic device that is different from the second electronic device.
7. The electronic device of item 6, wherein the second electronic device comprises a BPE access point multi-link device (MLD) and the third electronic device comprises a different physical access point from the second electronic device.
8. The electronic device of any preceding item, wherein the BPE capability of the electronic device is provided in an association request, a re-association request or a robust security network extension element (RSNXE).
9. The electronic device of item 8, wherein the BPE capability of the electronic device comprises BPE parameters of the electronic device.
10.The electronic device of any preceding item, wherein, after the association, the authentication or both, the one or more interface circuits are configured to receive, associated with the second electronic device, BPE parameters of the other electronic device.
11. The electronic device of item 10, wherein the BPE parameters of the other electronic device are received in a reduced neighbor report (RNR).
12.The electronic device of any preceding item, wherein the other electronic device comprises the second electronic device.
13.The electronic device of any preceding item, wherein the electronic device is preconfigured with BPE parameters of the other electronic device.
14.The electronic device of any preceding item, wherein the transition comprises a fast transition or seamless roaming.
15.The electronic device of any preceding item, wherein, after the association, the authentication or both, the one or more interface circuits are configured to:
   provide, addressed to the second electronic device, an add link request that includes BPE non-access point MLD parameters; and
   receive, associated with the second electronic device, an add link response that includes BPE access point MLD parameters.
16.The electronic device of item 15, wherein, after the add link response is received, the other electronic device uses a different epoch start time, different epoch numbers than the electronic device, or both.
17.The electronic device of any preceding item, wherein the electronic device is compatible with an Institute of Electrical and Electronics Engineers (IEEE) 802.11bi standard.
18. A method for receiving a recommendation, comprising:
   by an electronic device:
   receiving, associated with a second electronic device, a beacon or a probe response that indicates a presence of at least another electronic device with a basic service set (BSS) privacy enhancement (BPE) capability in a network;
   associating and authenticating with the second electronic device, wherein, during or after the association or the authentication, the electronic device indicates a BPE capability of the electronic device; and
   receiving, associated with the second electronic device, a unicast management frame recommending that the electronic device transition to a link associated with the other electronic device and that has the BPE capability.
19. The method of item 18, wherein, after the association, the authentication or both, the method comprises providing, addressed to the second electronic device, BPE parameters of the other electronic device.
20.A second electronic device, comprising:
   an antenna node configured to communicatively couple to an antenna; and
   one or more interface circuits, communicatively coupled to the antenna node, wherein the one or more interface circuits are configured to:
      providing, a beacon or a probe response that indicates a presence of at least another electronic device with a basic service set (BSS) privacy enhancement (BPE) capability in a network;
      associating and authenticating with a second electronic device, wherein, during or after the association or the authentication, the second electronic device receives, associated with the electronic device, a BPE capability of the electronic device; and
      providing, addressed to the electronic device, a unicast management frame recommending that the electronic device transition to a link associated with the other electronic device and having the BPE capability.
21. The second electronic device of item 20, wherein the second electronic device comprises a BPE access point multi-link device (MLD).
22.The second electronic device of item 20 or 21, wherein, after the association, the authentication or both, the one or more interface circuits are configured to provide, addressed to the second electronic device, BPE parameters of the other electronic device.
23.A non-transitory computer-readable storage medium for use with an electronic device or a second electronic device of items 1-17 and 20-22, wherein the non-transitory computer-readable storage medium stores program instructions that, when executed by the electronic device or the second electronic device, cause the electronic device or the second electronic device to perform operations in any of items 1-17 and 20-22.
24.A method of items 1-17 and 20-22, wherein, during the method, the electronic device or the second electronic device performs operations in any of items 1-17 and 20-22.
25.A wireless device comprising circuitry configured to cause the wireless device to perform one or more of the operations as shown and described herein in the Detailed Description.
26.A non-transitory computer readable storage medium configured to store instructions that, when executed by a processor included in a wireless device, cause the wireless device to perform one or more of the operations as shown and described herein in the Detailed Description.
27.A method that includes any action or combination of actions as substantially described herein in the Detailed Description.
28.A wireless device configured to perform any action or combination of actions as substantially described herein in the Detailed Description.
29.A wireless device that includes any component or combination of components as described herein in the Detailed Description as included in the wireless device.
30.A non-volatile computer-readable medium that stores instructions that, when executed by a processor, cause the performance of any action or combination of actions as substantially described herein in the Detailed Description.
An integrated circuit configured to perform any action or combination of actions as substantially described herein in the Detailed Description.

The foregoing description is intended to enable any person skilled in the art to make and use the disclosure, and is provided in the context of a particular application and its requirements. Moreover, the foregoing descriptions of embodiments of the present disclosure have been presented for purposes of illustration and description only. They are not intended to be exhaustive or to limit the present disclosure to the forms disclosed. Accordingly, many modifications and variations will be apparent to practitioners skilled in the art, and the general principles defined herein can be applied to other embodiments and applications without departing from the spirit and scope of the present disclosure. Additionally, the discussion of the preceding embodiments is not intended to limit the present disclosure. Thus, the present disclosure is not intended to be limited to the embodiments shown, but is to be accorded the widest scope consistent with the principles and features disclosed herein.

## Claims

1. An electronic device, comprising:
an antenna node configured to communicatively couple to an antenna; and
one or more interface circuits, communicatively coupled to the antenna node, configured to:
receive, associated with a second electronic device, a beacon or a probe response that indicates a presence of at least another electronic device with a basic service set (BSS) privacy enhancement (BPE) capability in a network;
associate and authenticate with the second electronic device, wherein, during or after the association or the authentication, the electronic device indicates a BPE capability of the electronic device; and
receive, associated with the second electronic device, a unicast management frame recommending that the electronic device transition to a link associated with the other electronic device and that has the BPE capability.

2. The electronic device of claim 1, wherein the second electronic device comprises a BPE access point multi-link device (MLD).

3. The electronic device of claim 2, wherein, after the association and the authentication, the one or more interface circuits are configured to provide, addressed to the second electronic device, a BSS transition management (BTM) query, and
wherein the BTM query requests information specifying the BPE capability of the other electronic device.

4. The electronic device of any preceding claim, wherein the unicast management frame comprises a BTM request.

5. The electronic device of any preceding claim, wherein the second electronic device comprises a BPE access point multi-link device (MLD), and the link is provided by the second electronic device.

6. The electronic device of any preceding claim, wherein the link is provided by a third electronic device that is different from the second electronic device.

7. The electronic device of claim 6, wherein the second electronic device comprises a BPE access point multi-link device (MLD) and the third electronic device comprises a different physical access point from the second electronic device.

8. The electronic device of any preceding claim, wherein the BPE capability of the electronic device is provided in an association request, a re-association request or a robust security network extension element (RSNXE); and
wherein the BPE capability of the electronic device comprises BPE parameters of the electronic device.

9. The electronic device of any preceding claim, wherein, after the association, the authentication or both, the one or more interface circuits are configured to receive, associated with the second electronic device, BPE parameters of the other electronic device in a reduced neighbor report (RNR).

10. The electronic device of any preceding claim, wherein the other electronic device comprises the second electronic device.

11. The electronic device of any preceding claim, wherein the electronic device is preconfigured with BPE parameters of the other electronic device.

12. The electronic device of any preceding claim, wherein the transition comprises a fast transition or seamless roaming.

13. The electronic device of any preceding claim, wherein, after the association, the authentication or both, the one or more interface circuits are configured to:
provide, addressed to the second electronic device, an add link request that includes BPE non-access point MLD parameters; and
receive, associated with the second electronic device, an add link response that includes BPE access point MLD parameters.

14. The electronic device of claim 13, wherein, after the add link response is received, the other electronic device uses a different epoch start time, different epoch numbers than the electronic device, or both.

15. A method for receiving a recommendation, comprising:
by an electronic device:
receiving, associated with a second electronic device, a beacon or a probe response that indicates a presence of at least another electronic device with a basic service set (BSS) privacy enhancement (BPE) capability in a network;
associating and authenticating with the second electronic device, wherein, during or after the association or the authentication, the electronic device indicates a BPE capability of the electronic device; and
receiving, associated with the second electronic device, a unicast management frame recommending that the electronic device transition to a link associated with the other electronic device and that has the BPE capability.
